Europäisches Patentamt

European Patent Office

Office européen des brevets

(19)

(11) Veröffentlichungsnummer : **0 396 961 B1**

## (12) EUROPÄISCHE PATENTSCHRIFT

(45) Veröffentlichungstag der Patentschrift :
**17.06.92 Patentblatt 92/25**

(21) Anmeldenummer : **90107803.0**

(22) Anmeldetag : **25.04.90**

(51) Int. Cl.⁵ : **F16L 59/02, E04B 1/74**

---

## (54) Formkörper zur Wärmedämmung.

Die Akte enthält technische Angaben, die nach dem Eingang der Anmeldung eingereicht wurden und die nicht in dieserPatentschrift enthalten sind.

(30) Priorität : **10.05.89 DE 3915170**

(43) Veröffentlichungstag der Anmeldung :
**14.11.90 Patentblatt 90/46**

(45) Bekanntmachung des Hinweises auf die Patenterteilung :
**17.06.92 Patentblatt 92/25**

(84) Benannte Vertragsstaaten :
**AT BE CH DE DK ES FR GB GR IT LI LU NL SE**

(56) Entgegenhaltungen :
**EP-A- 0 254 993**
**EP-B- 0 164 006**
**DE-A- 3 229 318**
**DE-A- 3 304 738**

(73) Patentinhaber : **Degussa Aktiengesellschaft**
**Weissfrauenstrasse 9**
**W-6000 Frankfurt am Main 1 (DE)**

(72) Erfinder : **Sextl, Gerhard, Dr.**
**Am Frohnbügel 11**
**W-8752 Geiselbach (DE)**
Erfinder : **Strack, Hans, Dr.**
**Riemenschneiderstrasse 1**
**W-8755 Alzenau (DE)**
Erfinder : **Fuss, Ilona**
**Herrenstrasse 9**
**W-6457 Maintal (DE)**
Erfinder : **Reuter, Roland**
**Hoetgerweg 12**
**W-6100 Darmstadt (DE)**
Erfinder : **Kleinschmit, Peter, Dr.**
**Wildaustrasse 9**
**W-6450 Hanau 9 (DE)**
Erfinder : **Schwarz, Rudolf, Dr.**
**Taunusstrasse 2**
**W-8755 Wasserlos (DE)**

## Beschreibung

Die Erfindung betrifft einen Formkörper, vorzugsweise plattenförmig, für die Verwendung als Wärmedämmung sowie das Verfahren zu seiner Herstellung.

Es ist bekannt, Wärmedämmplatten oder flache, ebene Wärmedämmkörper auf Basis von gefällter Kieselsäure herzustellen, die evakuiert und mit einer mehrschichtigen Umhüllung versehen sind.

So beschreiben die EP-A 0 190 582 sowie die EP-A 0 254 993 eine Umhüllung aus Verbundfolien, die zusätzlich eine Metallfolie aus z. B. Aluminium enthalten. Diese Folien sollen luft- und wasserdicht sein.

Die EP-B 0 164 006 beschreibt Wärmedämmplatten, die feinteilige Metalloxide enthalten und evakuiert sind. Das Umhüllungsmaterial kann eine Verbundfolie mit einer Schichtfolge aus thermoplastischem Material/Metallfolie/thermoplastischem Material sein.

Die bekannte Verwendung von metallbeschichteten Verbundfolien hat den Nachteil, daß parallel zur Folienoberfläche Wärme geleitet werden kann, was bei der Anwendung in Isolationsmaterialien zu unerwünschten Wärmebrücken an den Rändern eines Wärmedämmkörpers zwischen Kalt- und Warmseite führt.

Der damit verbundene nachteilige Einfluß auf die Gesamt-Wärmeleitfähigkeit eines Wärmedämmkörpers wird bei der Wärmeleitfähigkeitsmessung nach dem absoluten Einplattenverfahren mit Schutzringtechnik nach Kohlrausch (F. Kohlrausch: "Praktische Physik", Bd. 1, 22. Aufl., B.G. Teubner Verlag, Stuttgart, 1968, S. 375 ff.) nicht erfaßt.

Ein Wärmedämmkörper, der gemäß EP-A 0 190 582 unter Verwendung einer metallhaltigen Folie gefertigt wurde, zeigt, gemessen nach dem oben genannten Verfahren,bei 23 °C eine Wärmeleitfähigkeit von 8 mW/(m.K). Wählt man eine Meßanordnung ohne Schutzring, so steigt die Wärmeleitfähigkeit - abhängig von Formkörper-Geometrie und Größe und von der Metallschichtdicke in der Umhüllungsfolie - auf zum Teil erheblich höhere Werte an. Die Isolationsleistung des gesamten Wärmedämmkörpers hängt also auch entscheidend davon ab, ob die bei der Herstellung verwendete Umhüllungsfolie metallhaltig ist oder nicht.

Es besteht somit die Aufgabe, Wärmedämmkörper herzustellen, die sowohl quer als auch längs zum Verlauf der Verbundsfolie eine niedrige Wärmeleitfähigkeit aufweisen.

Gegenstand der Erfindung ist ein Formkörper, vorzugsweise plattenförmig, für die Verwendung als Wärmedämmung, hergestellt aus

a) einem feinverteilten, pulverförmigen bzw. faserförmigen Stoff, der eine Wasseraufnahmekapazität von 4 bis 50 Gew.-%, 23 °C und 85 % relative Feuchte hat,

b) einer metallfreien Umhüllung, die diesen feinverteilten, pulverförmigen bzw. faserförmigen Stoff umhüllt und dabei eine Wasserdampfdurchlässigkeit von 0,1 bis 0,5 g/(m².d) bei 23 °C und 85 % relativer Feuchte und Gasdurchlässigkeiten von 0,1 bis 0,5 cm³/(m².d.bar) bei 23 °C aufweist,

mit der Eigenschaft, Wasser bis zu einer Menge von 2 bis 15 Gew.-% aufzunehmen, ohne daß dabei seine Wärmeleitfähigkeit um mehr als 25 % verschlechtert wird.

Der feinverteilte, pulverförmige bzw. faserförmige Stoff kann in einer mikroporösen Umhüllung verpreßt werden.

Der feinverteilte, pulverförmige bzw. faserförmige Stoff kann in einer mikroporösen Umhüllung getrocknet werden.

In einer bevorzugten Ausführungsform kann die mikroporöse Umhüllung, die den feinverteilten, pulverförmigen bzw. faserförmigen Stoff in gepreßtem und getrocknetem Zustand enthält, in die metallfreie Umhüllung eingebracht werden.

Den erfindungsgemäßen Formkörper kann man herstellen, indem man

a) einen feinverteilten, pulverförmigen bzw. faserförmigen Stoff, der eine Wasseraufnahmekapazität von 4 bis 50 Gew.-% (bei 23 °C und 85 % relativer Feuchte) aufweist, bereitstellt und gegebenenfalls unter Bedingungen trocknet, die für ein Austreiben des Oberflächenwassers ausreichen,

b) den pulverförmigen bzw. faserförmigen Stoff gegebenenfalls verpreßt,

c) den gegebenenfalls getrockneten und gegebenenfalls verpreßten pulverförmigen bzw. faserförmigen Stoff in eine metallfreie Umhüllung, die eine Öffnung zum Evakuieren und eine Wasserdampfdurchlässigkeit von 0,1 bis 0,5 g/(m².d) (bei 23 °C und 85 % relativer Feuchte) und Gasdurchlässigkeiten von 0,1 bis 0,5 cm³/(m².d.bar) (bei 23 °C) aufweist, einbringt,

d) die metallfreie Umhüllung evakuiert und

e) die Evakuierungsöffnung der metallfreien Umhüllung unter Erhalt des Vakuums im Innern der Umhüllung verschließt.

In einer bevorzugten Ausführungsform des erfindungsgemäßen Verfahrens kann man den feinverteilten, pulverförmigen bzw. faserförmigen Stoff in einer mikroporösen Umhüllung trocknen.

In einer besonders bevorzugten Ausführungsform des erfindungsgemäßen Verfahrens kann man den feinverteilten, pulverförmigen bzw. faserförmigen Stoff in einer mikroporösen Umhüllung verpressen und gegebenenfalls danach trocknen.

Die Trocknung des feinverteilten, pulverförmigen bzw. faserförmigen Stoffes kann in einer bevorzugten Ausführungsform der Erfindung mittels Mikrowellen erfolgen.

Als mikroporöse Umhüllung, die im Prinzip dazu dient, den feinteiligen, pulverförmigen Stoff während des Trocknens und Verpressens zusammenzuhalten, kann eine Folie oder ein Vlies-Stoff aus z. B. Polypropylen, Polyester oder Filterpapier verwendet werden.

Im allgemeinen kann zu diesem Zweck eine Folie oder ein Material verwendet werden, das Gase (z. B. Luft) und Feuchtigkeit durchläßt und den feinteiligen, pulverförmigen Stoff zurückhält.

Als feinverteilter, pulverförmiger Stoff kann im Prinzip jeder Stoff verwendet werden, dessen chemische Eigenschaften sich im Laufe der Zeit nicht verändern, und der eine Wasseraufnahmekapazität von 4 - 50 Gew.-% bei 23 °C und 85 % relativer Feuchte besitzt.

Die Wassermenge, die der erfindungsgemäße Formkörper aufnehmen darf, entspricht der Menge an Wasser, bei der die Wärmeleitfähigkeit des Formkörpers um nicht mehr als 25 % erhöht wird. Der in diesem Sinne zulässige Wassergehalt des Formkörpers beträgt 2 bis 15 Gew.-% und liegt im allgemeinen niedriger als die Wasseraufnahmekapazität des zur Herstellung des Formkörpers verwendeten pulverförmigen Stoffes.

In einer bevorzugten Ausführungsform kann die zulässige Wassermenge im Formkörper 5 bis 12 Gew.-%, insbesondere 6 bis 7 Gew.-% betragen.

Bevorzugt wird ein feinverteiltes Siliciumdioxid-Material, hergestellt durch Umsetzung von einem Alkaliwasserglas und einer Mineralsäure zur Ausfällung des Siliciumdioxides, das allein oder in Mischung mit anderen Kieselsäuren oder pulverförmigen Stoffen verwendet wird.

Derartige Fällungskieselsäuren werden beispielsweise in Ullmann's Enzyklopädie der technischen Chemie, 4. Auflage, Band 21, Seite 462 ff. beschrieben.

Besonders geeignet sind Fällungskieselsäuren, die nach technisch üblichen Verfahren getrocknet (z. B. mit Sprühtrockner, Etagentrockner, Trommeltrockner) und vermahlen (z. B. mit Querstrom-, Stift-, Luftstrahloder Dampfstrahlmühle) wurden.

Derartige Fällungskieselsäuren sind beispielsweise unter folgenden Bezeichnungen erhältlich:

Sipernat 22 S, Sipernat 22 LS, Sipernat 50 S, FK 500 LS, FK 500 DS, FK 320 DS, FK 310, FK 700 DS.

Insbesondere werden Fällungskieselsäuren eingesetzt, die sprühgetrocknet und vermahlen wurden.

Derartige Fällungskieselsäuren sind unter der Bezeichnung FK 500 LS oder Sipernat 22 LS im Handel erhältlich.

Es können auch die folgenden Stoffe oder Stoffkombinationen eingesetzt werden:

Mischungen aus verschiedenen gefällten Kieselsäuren, wie z. B. Sipernat 22 LS und FK 500 LS, Sipernat 22 LS und FK 320 DS, FK 500 LS und FK 320 DS, FK 500 LS und FK 500 DS, FK 500 LS und FK 700 DS, FK 700 DS und FK 310.

Mischungen aus gefällten und pyrogenen Kieselsäuren, wie z. B. Sipernat 22 LS, FK 320 DS, FK 310, FK 700 DS und/oder FK 500 LS mit Aerosil A 200 und/oder Aerosil A 300.

Mischungen aus gefällten Kieselsäuren und Kieselsäure-Gelen, wie Sipernat 22 LS, FK 320 DS und/oder FK 500 LS mit Kieselsäuregelen (z. B. die Typen Syloid 72 und Syloid 244 der Fa. Grace, Worms).

Mischungen aus gefällten Kieselsäuren und mineralischen Stoffen, wie z. B. Sipernat 22 LS, FK 320 DS und/oder FK 500 LS mit Perliten, Kaolinit, Montmorillonit, Glimmer und/oder Calciumsulfat (Gips).

Mischungen aus gefällten Kieselsäuren und vermahlenen Gläsern oder glasartigen Stoffen, wie z. B. Sipernat 22 LS, FK 320 DS und/oder FK 500 LS mit Glasmehl und/oder sehr feiner Glaswolle.

Mischungen aus gefällten Kieselsäuren und Rußen, wie z. B. Sipernat 22 LS, FK 320 DS und/oder FK 500 LS mit Furnace-Rußen, Flammrußen und/oder Gasrußen.

Mischungen aus gefällten Kieselsäuren und synthetischen oder natürlichen silikatischen Stoffen, wie z. B. Sipernat 22 LS, FK 320 DS und/oder FK 500 LS mit synthetischen oder natürlichen Zeolithen oder Aluminiumsilikaten oder anderen silikatischen Stoffen (Calciumsilikat, Kieselgur, Extrusil).

Mischungen aus gefällten Kieselsäuren und synthetischen Abfallstoffen, wie z. B. Sipernat 22 LS, FK 320 DS und/oder FK 500 LS mit Flugstäuben, Kraftwerksaschen, Aschen von Verbrennungsanlagen aller Art.

Mischungen aus gefällten Kieselsäuren und nichtmetallischen Elementen, wie z. B. Sipernat 22 LS, FK 320 DS und/oder FK 500 LS mit Schwefel und/oder vermahlener Kohle.

Mischungen aus gefällten Kieselsäuren und Fasern, wie z. B. Sipernat 22 LS, FK 320 DS und/oder FK 500 LS mit anorganischen oder organischen Fasern (Zellwolle oder feine Kunststoff-Fasern aller Art).

Mischungen aus gefällten Kieselsäuren und pyrogenen Metalloxiden, wie z. B. Sipernat 22 LS, FK 320 DS und/oder FK 500 LS mit pyrogenem Aluminiumoxid, Eisenoxid und/oder Titandioxid.

Pyrogene Kieselsäuren, wie z. B. A 200, A 300, A 380, A 450, OX 50, speziell vorbehandelte Aerosile, Aerosil MOX-Typen, Aerosil COK 84.

Mischungen verschiedener pyrogener Kieselsäuren, wie z. B. A 200 oder A 300 mit speziell vorbehandelten Aerosil-Typen.

Mischungen aus pyrogenen Kieselsäuren und Kieselsäure-Gelen, wie z. B. A 200 und/oder A 300 mit Kieselsäuregelen (z. B. die Typen Syloid 72 und Syloid 244 der Fa. Grace, Worms).

Mischungen aus pyrogenen Kieselsäuren und mineralischen Stoffen, wie z. B. A 200 und/oder A 300 mit Perliten, Kaolinit, Montmorillonit, Glimmer und/oder Calciumsulfat (Gips).

Mischungen aus pyrogenen Kieselsäuren und vermahlenen Gläsern oder glasartigen Stoffen, wie z. B. A 200 und/oder A 300 mit Glasmehl und/oder sehr feiner Glaswolle.

Mischungen aus pyrogenen Kieselsäuren und Rußen, Gasrußen, wie z. B. A 200 und/oder A 300 mit Furnace-Rußen, Flammrußen und/oder Gasrußen.

Mischungen aus pyrogenen Kieselsäuren und synthetischen oder natürlichen silikatischen Stoffen, wie z. B. A 200 und/oder A 300 mit synthetischen oder natürlichen Zeolithen oder Aluminiumsilikaten oder anderen silikatischen Stoffen (Calciumsilikat, Kieselgur, Extrusil).

Mischungen aus pyrogenen Kieselsäuren und synthetischen Abfallstoffen, wie z. B. A 200 und/oder A 300 mit Flugstäuben, Kraftwerksaschen, Aschen von Verbrennungsanlagen aller Art.

Mischungen aus pyrogenen Kieselsäuren und nichtmetallischen Elementen, wie z. B. A 200 und/oder A 300 mit Schwefel und/oder vermahlener Kohle.

Mischungen aus pyrogenen Kieselsäuren und Fasern, wie z. B. A 200 und/oder A 300 mit anorganischen oder organischen Fasern (Zellwolle oder feine Kunststoff-Fasern aller Art).

Mischungen aus pyrogenen Kieselsäuren und pyrogenen Metalloxiden, wie z. B. A 200 und/oder A 300 mit pyrogenem Aluminiumoxid, Eisenoxid, Titandioxid.

Mischungen aus Rußen und Kieselsäure-Gelen, wie z. B. Ruße oder Rußmischungen mit Kieselsäuregelen (z. B. die Typen Syloid 72 und Syloid 244 der Fa. Grace, Worms).

Mischungen auf Rußen und mineralischen Stoffen, wie z. B. Ruße oder Rußmischungen mit Montmorillonit und/oder Calciumsulfat (Gips).

Mischungen aus Rußen und synthetischen oder natürlichen silikatischen Stoffen, wie z. B. Ruße oder Rußmischungen mit synthetischen oder natürlichen Zeolithen oder Aluminiumsilikaten oder anderen silikatischen Stoffen (Calciumsilikat, Kieselgur, Extrusil).

Mischungen aus Rußen und pyrogenen Metalloxiden, wie z. B. Ruße oder Rußmischungen mit pyrogenem Aluminiumoxid, Eisenoxid, Titandioxid.

Zeolithe (zeolithische Molekularsiebe), wie z. B. Zeolith A, Zeolith X, Zeolith Y, vorbehandelte Zeolithe.

Mischungen aus verschiedenen Zeolithen, wie z. B. Zeolith X mit Zeolith Y.

Mischungen aus Zeolithen und Kieselsäure-Gelen, wie z. B. Zeolithe oder Zeolithmischungen mit Kieselsäuregelen (z. B. die Typen Syloid 72 und Syloid 244 der Fa. Grace, Worms)

Mischungen aus Zeolithen und mineralischen Stoffen, wie z. B. Zeolithe oder Zeolithmischungen mit Perliten, Kaolinit, Montmorillonit, Glimmer und/oder Calciumsulfat (Gips).

Mischungen aus Zeolithen und vermahlenen Gläsern oder glasartigen Stoffen, wie z. B. Zeolithe oder Zeolithmischungen mit Glasmehl und/oder sehr feiner Glaswolle.

Mischungen aus Zeolithen und synthetischen oder natürlichen silikatischen Stoffen, wie z. B. Zeolithe oder Zeolithmischungen mit synthetischen Aluminiumsilikaten oder anderen silikatischen Stoffen (Calciumsilikat, Kieselgur, Extrusil).

Mischungen aus Zeolithen und synthetischen Abfallstoffen, wie z. B. Zeolithe oder Zeolithmischungen mit Flugstäuben, Kraftwerksaschen, Aschen von Verbrennungsanlagen aller Art.

Mischungen aus Zeolithen und nichtmetallischen Elementen, wie z. B. Zeolithe oder Zeolithmischungen mit Schwefel und/oder vermahlener Kohle.

Mischungen aus Zeolithen und Fasern, wie z. B. Zeolithe oder Zeolithmischungen mit anorganischen oder organischen Fasern (Zellwolle oder feine Kunststoff-Fasern aller Art).

Mischungen aus Zeolithen und pyrogenen Metalloxiden, wie z. B. Zeolithe oder Zeolithmischungen mit pyrogenem Aluminiumoxid, Eisenoxid, Titandioxid.

Kieselgele, wie z. B. Syloid 72 (Fa. Grace, Worms), Syloid 244 (Fa. Grace, Worms).

Mischungen aus unterschiedlichen Kieselsäuregelen, wie z. B. Syloid 72 mit Syloid 244 (Fa. Grace, Worms), unterschiedlich vorbehandelte Kieselsäuregele.

Mischungen aus Kieselgelen und mineralischen Stoffen, wie z. B. Kieselgele oder Kieselgelmischungen mit Perliten, Kaolinit, Montmorillonit, Glimmer und/oder Calciumsulfat (Gips).

Mischungen aus Kieselgelen und vermahlenen Gläsern oder glasartigen Stoffen, wie z. B. Kieselgele oder Kieselgelmischungen mit Glasmehl und/oder sehr feiner Glaswolle.

Mischungen aus Kieselgelen und synthetischen oder natürlichen silikatischen Stoffen, wie z. B. Kieselgele oder Kieselgelmischungen mit synthetischen Aluminiumsilikaten oder anderen silikatischen Stoffen (Calciumsilikat, Kieselgur, Extrusil).

Mischungen aus Kieselgelen und synthetischen Abfallstoffen, wie z. B. Kieselgele oder Kieselgelmischungen mit Flugstäuben, Kraftwerksaschen, Aschen von Verbrennungsanlagen aller Art.

Mischungen aus Kieselgelen und nichtmetallischen Elementen, wie z. B. Kieselgele oder Kieselgelmischungen mit Schwefel und/oder vermahlener Kohle.

Mischungen aus Kieselgelen und Fasern, wie z. B. Kieselgele oder Kieselgelmischungen mit anorganischen oder organischen Fasern (Zellwolle oder feine Kunststoff-Fasern aller Art).

Mischungen aus Kieselgelen und pyrogenen Metalloxiden, wie z. B. Kieselgele oder Kieselgelmischungen mit pyrogenem Aluminiumoxid, Eisenoxid, Titandioxid.

Mischungen aus unterschiedlichen Aluminiumsilikaten, wie z. B. verschiedene Aluminiumsilikat-Typen, unterschiedlich vorbehandelte Aluminiumsilikate.

Mischungen aus Aluminiumsilikaten und mineralischen Stoffen, wie z. B. Aluminiumsilikate oder Aluminiumsilikatmischungen mit Perliten, Kaolinit, Montmorillonit, Glimmer und/oder Calciumsulfat (Gips).

Mischungen aus Aluminiumsilikaten und vermahlenen Gläsern oder glasartigen Stoffen, die z. B. Aluminiumsilikate oder Aluminiumsilikatmischungen mit Glasmehl und/oder sehr feiner Glaswolle.

Mischungen aus Aluminiumsilikaten und synthetischen oder natürlichen silikatischen Stoffen, wie z. B. Aluminiumsilikate oder Aluminiumsilikatmischungen mit anderen silikatischen Stoffen (Calciumsilikat, Kieselgur, Extrusil).

Mischungen aus Aluminiumsilikaten und synthetischen Abfallstoffen, wie z. B. Aluminiumsilikate oder Aluminiumsilikatmischungen mit Flugstäuben, Kraftwerksaschen, Aschen von Verbrennungsanlagen aller Art.

Mischungen aus Aluminiumsilikaten und nichtmetallischen Elementen, wie z. B. Aluminiumsilikate oder Aluminiumsilikatmischungen mit Schwefel und/oder vermahlener Kohle.

Mischungen aus Aluminiumsilikaten und Fasern, wie z. B. Aluminiumsilikate oder Aluminiumsilikatmischungen mit anorganischen oder organischen Fasern (Zellwolle oder feine Kunststoff-Fasern aller Art).

Mischungen aus Aluminiumsilikaten und pyrogenen Metalloxiden, wie z. B. Aluminiumsilikate oder Aluminiumsilikatmischungen mit pyrogenem Aluminiumoxid, Eisenoxid, Titandioxid.

Metalloxide (pyrogen oder gefällt), wie z. B. Aluminiumoxid, Eisenoxide, Titandioxid, Zirkondioxid.

Mischungen aus unterschiedlichen Metalloxiden (pyrogen oder gefällt), wie z. B. Aluminiumoxid mit verschiedenen Eisenoxiden, Aluminiumoxid mit Titandioxid, Titandioxid mit verschiedenen Eisenoxiden.

Mischungen aus Metalloxiden (pyrogen oder gefällt) und mineralischen Stoffen, wie z. B. Aluminiumoxid, verschiedene Eisenoxide, Titandioxid und/oder Zirkondioxid mit Perliten, Kaolinit, Montmorillonit, Glimmer und-/oder Calciumsulfat (Gips).

Mischungen aus Metalloxiden (pyrogen oder gefällt) und vermahlenen Gläsern oder glasartigen Stoffen, wie z. B. Aluminiumoxid, verschiedene Eisenoxide, Titandioxid und/oder Zirkondioxid mit Glasmehl und/oder sehr feiner Glaswolle.

Mischungen aus Metalloxiden (pyrogen oder gefällt) und synthetischen oder natürlichen silikatischen Stoffen, wie z. B. Aluminiumoxid, verschiedene Eisenoxide, Titandioxid und/oder Zirkondioxid mit silikatischen Stoffen (Calciumsilikat, Kieselgur, Extrusil).

Mischungen aus Metalloxiden (pyrogen oder gefällt) und synthetischen Abfallstoffen, die z. B. Aluminiumoxid, verschiedene Eisenoxide, Titandioxid und/oder Zirkondioxid mit Flugstäuben, Kraftwerksaschen, Aschen von Verbrennungsanlagen aller Art.

Mischungen aus Metalloxiden (pyrogen oder gefällt) und nichtmetallischen Elementen, wie z. B. Alunmiumoxid, verschiedene Eisenoxide, Titandioxid und/oder Zirkondioxid mit Schwefel und/oder vermahlener Kohle.

Mischungen aus Metalloxiden (pyrogen oder gefällt) und Fasern, wie z. B. Aluminiumoxide, verschiedene Eisenoxide, Titandioxid und/oder Zirkondioxid mit anorganischen oder organischen Fasern (Zellwolle oder feine Kunststoff-Fasern aller Art).

Als gefällte Kieselsäuren können weiterhin eingesetzt werden:

HISIL T 600, HISIL T 690 der Fa. PPG

Tixosil 333 der Fa. Rhône-Poulenc

Hoesch SM 614 der Fa. AKZO

Zeothix 265 und Zeothix 177 der Fa. Huber

Die erfindungsgemäß einsetzbaren Umhüllungen können bekannte Folien bzw. Mehrschichtfolien sein, wie sie zum Beispiel beschrieben werden in:

H. Hinsken, Kunststoff-Verbundfolien in der Verpackung - eine Übersicht, Kunststoffe 77 (1987), Seite 461 ff, M. Boysen, Barrierekunststoffe für Verpackungen im Vergleich, Kunststoffe 77, (1987), Seite 522 ff.

Die metallfreie Umhüllung kann dabei eine Wasserdampfdurchlässigkeit von 0,1 bis 0,5 g/(m$^2$.d), 23 °C und 85 % relativer Feuchte aufweisen. Die Durchlässigkeiten gegenüber anderen Gasen (z. B. $O_2$, $N_2$, $CO_2$) dürfen in der Summe nicht größer als 0,5 cm$^3$/(m$^2$.d.bar) bei 23 °C sein. Die Gasdurchlässigkeiten liegen damit gegenüber der Wasserdampfdurchlässigkeit (0,5 g/(m².d) Wasser entspricht etwa einem Volumen von 600 cm³/(m².d) an Wasserdampf) um etwa den Faktor 1000 niedriger und können deshalb vernachlässigt werden.

Geeignet für die erfindungsgemäßen Formkörper sind feinverteilte, pulverförmige bzw. faserförmige Stoffe, die eine Wasseraufnahmekapazität von 4 bis 50 Gew.-% (bei 23 °C und 85 % relativer Feuchte) haben. Die Wassermenge, die die feinverteilten Stoffe bei der Verwendung im erfindungsgemäßen Formkörper aufnehmen dürfen, ist in der Regel kleiner als deren Wasseraufnahmekapazität. Der Grenzwert für die zulässige Wasseraufnahme im Wärmedämmkörper entspricht der Menge an Wasser, bei der die Wärmeleitfähigkeit des Formkörpers um nicht mehr als 25 % gegenüber einem trockenen Formkörper zugenommen hat. Zur Herstellung eines trockenen Formkörpers wird ein feinverteilter Stoff verwendet, der gemäß DIN 55 921 getrocknet wurde. Bevorzugt liegt die entsprechende Wassermenge, die ein Wärmedämmkörper aufnehmen darf, zwischen 2 und 15 Gew.-%, bezogen auf den trockenen Füllstoff.

Die erfindungsgemäßen Wärmedämmkörper weisen gegenüber den Wärmedämmkörpern gemäß Stand der Technik den Vorteil auf, daß durch die Verwendung metallfreier Umhüllungsfolien die Wärmeleitfähigkeit im Kantenbereich der Wärmedämmkörper so gering ist, daß die sehr gute Gesamt-Wärmeleitfähigkeit der Formkörper von etwa 8 mW/(m.K) (gemessen nach dem absoluten Einplattenverfahren mit Schutzring an Wärmedämmstoffen, hergestellt aus der Fällungskieselsäure FK 500 LS) nur unwesentlich beeinträchtigt wird.

Somit lassen sich aus den erfindungsgemäßen Wärmedämmkörpern beispielsweise Behältnisse anfertigen, die für die Lagerung und/oder den Transport von temperaturempfindlichen Gütern geeignet sind (Beispiele hierfür sind Einweg-Transportbehälter für temperaturempfindliche Medikamente oder Impfstoffe).

In der folgenden Tabelle sind Beispiele für die Wärmeleitfähigkeiten von Wärmedämmkörpern aufgeführt, die mit metallhaltiger und metallfreier Umhüllungsfolie gefertigt wurden. Die Wärmeleitfähigkeiten wurden jeweils nach dem absoluten Einplattenverfahren mit Schutzring und nach einem Verfahren ohne Schutzringtechnik gemessen. Im Verfahren ohne Schutzringtechnik werden Wärmeströme, die durch die Umhüllungsfolie von einer Seite eines plattenförmigen Wärmedämmkörpers zur anderen fließen, nicht kompensiert und man erhält einen Wert für die Gesamt-Wärmeleitfähigkeit des Wärmedämmkörpers (abhängig von Geometrie und Größe des Formkörpers).

Füllgut: FK 500 LS

Abmessungen: 250 mm x 250 mm x 20 mm

Wärmeleitfähigkeiten verschiedener Wärmedämmkörper als Funktion der Meßmethode bei 23 °C

| Wärmedämmkörper-Art | Wärmeleitfähigkeit | |
|---|---|---|
| | gemäß absoluten Einplattenverfahren mit Schutzring | gemäß Einplattenverfahren ohne Schutzring |
| Wärmedämmkörper mit metallhaltiger Umhüllung | 8 mW/(m.K) | etwa 25 mW/(m.K) |
| Wärmedämmkörper mit metallfreier Umhüllung gemäß Erfindung | 8 mW/(m.K) | etwa 9 mW/(m.K) |

Die erfindungsgemäß eingesetzten pulverförmigen bzw. faserförmigen Stoffe sind beispielsweise durch die folgenden physikalisch-chemischen Kenndaten gemäß Tabellen 1, 2, 3 und 4 gekennzeichnet:

Tabelle 1

| | | AEROSIL 200 | AEROSIL 300 | AEROSIL 380 | AEROSIL OX 50 | AEROSIL COK 84 |
|---|---|---|---|---|---|---|
| Oberfläche nach BET | $m^2/g$ | 200±25 | 300±30 | 300±30 | 50±15 | 170±30 |
| Mittlere Größe der Primärteilchen | Nanometer | 12 | 7 | 7 | 40 | – |
| Stampfdichte 1) | g/l | ca. 50 | ca. 50 | ca. 50 | ca. 130 | ca. 50 |
| Trocknungsverlust 2) (2h bei 105 °C) bei Verlassen des Werkes | % | < 1,5 | < 1,5 | < 1,5 | < 1,5 | < 1,5 |
| Glühverlust 2) 7) (2h bei 1000°C) | % | < 1 | < 2 | < 2,5 | < 1 | < 1 |
| pH-Wert 3) (in 4%iger wäßriger Dispersion) | | 3,6-4,3 | 3,6-4,3 | 3,6-4,3 | 3,8-4,5 | 3,6-4,3 |
| $SiO_2$ 5) | % | > 99,8 | > 99,8 | > 99,8 | > 99,8 | 82-86 |
| $Al_2O_3$ 5) | % | < 0,05 | < 0,05 | < 0,05 | < 0,08 | 14-18 |
| $Fe_2O_3$ 5) | % | < 0,003 | < 0,003 | < 0,003 | < 0,01 | < 0,1 |
| $TiO_2$ 5) | % | < 0,03 | < 0,03 | < 0,03 | < 0,03 | < 0,03 |
| HCl 5) 10) | % | < 0,025 | < 0,025 | < 0,025 | < 0,01 | < 0,1 |
| Siebrückstand 4) nach Mocker (45 μm) | % | < 0,05 | < 0,05 | < 0,05 | < 0,1 | < 0,1 |

. . .

EP 0 396 961 B1

1) nach DIN 52 194

2) nach DIN 55 921

3) nach DIN 53 200

4) nach DIN 53 580

5) bezogen auf die 2 Stunden bei 1000 °C geglühte Substanz

7) bezogen auf die 2 Stunden bei 105 °C getrocknete Substanz

10) HCl-Gehalt ist Bestandteil des Glühverlustes

Tabelle 2

| | | EXTRUSIL |
|---|---|---|
| Oberfläche nach BET 1) | $m^2/g$ | 35 |
| Mittlere Größe der Agglomerate | µm | 5   8) |
| Stampfdichte 2) | g/l | 300 |
| Trocknungsverlust (2h bei 105 °C) bei Verlassen des Lieferwerkes 3) | % | 6 |
| Glühverlust (2h bei 1000°C) 4) 10) | % | 7 |
| pH-Wert (in 5%iger wäßriger Dispersion) 5) | | 10 |
| DBP-Absorption 6) 10) | g/100 g | 160 |
| $SiO_2$ 11) | % | 91 |
| $Al_2O_3$ 11) | % | 0,2 |
| CaO 11) | % | 6 |
| $Na_2O$ 11) | % | 2 |
| $Fe_2O_3$ 11) | % | 0,03 |
| $SO_3$ 11) | % | – |
| Cl- 11) | % | 0,8 |
| Siebrückstand (nach Mocker, 45 µm) 7) | % | 0,2 |

1) nach DIN 66 131

2) nach DIN ISO 787/XI, JIS K 5101/78 (nicht gesiebt)

3) nach DIN ISO 787/II, ASTM D 280, JIS K 5101/21

4) nach DIN 55 921, ASTM D 1208, JIS K 5101/23

5) nach DIN ISO 787/IX, ASTM D 1208, JIS K 5101/24

6) nach DIN 53 601, ASTM D 2414

7) nach DIN ISO 787/XVIII, JIS K 5101/20

8) Coulter Counter, 100 µm Kapillare

10) bezogen auf die 2 Stunden bei 105 °C getrocknete
   Substanz

11) bezogen auf die 2 Stunden bei 1000°C geglühte Substanz

Tabelle 3

| | | FK 320 DS | FK 500 LS | SIPERNAT 22 LS |
|---|---|---|---|---|
| Oberfläche nach BET 1) | $m^2/g$ | 170 | 450 | 190 |
| Mittlere Größe der Agglomerate | µm | 4  9) | 3,5  9) | 4,5  9) |
| Stampfdichte 2) | g/l | 80 | 80 | 80 |
| Trocknungsverlust (2h bei 105°C) bei Verlassen des Lieferwerkes 3) | % | 6 | 3 | 6 |
| Glühverlust (2h bei 1000 °C) 4) 10) | % | 5 | 5 | 5 |
| pH-Wert (in 5 %iger wäßriger Dispersion) 5) | | 6,3 | 6,5 | 6,3 |
| DBP-Absorption 6) 10) | g/100 g | 230 | 330 | 270 |
| $SiO_2$ 11) | % | 98 | 98,5 | 98 |
| $Na_2O$ 11) | % | 1 | 0,6 | 1 |
| $Fe_2O_3$ 11) | % | 0,03 | 0,03 | 0,03 |
| $SO_3$ 11) | % | 0,8 | 0,7 | 0,8 |
| Siebrückstand (nach Mocker, 45 µm) 7) | % | 0,01 | 0,02 | 0,1 |

10

1) nach DIN 66 131

2) nach DIN ISO 787/XI, JIS K 5101/18 (nicht gesiebt)

3) nach DIN ISO 787/II, ASTM D 280, JIS K 5101/21

4) nach DIN 55 921, ASTM D 1208, JIS K 5101/23

5) nach DIN ISO 787/IX, ASTM D 1208, JIS K 5101/24

6) nach DIN 53 601, ASTM D 2414

7) nach DIN ISO 787/XVIII, JIS K 5101/20

9) Coulter Counter, 50 µm Kapillare

10) bezogen auf die 2 Stunden bei 105 °C getrocknete Substanz

11) bezogen auf die 2 Stunden bei 1000°C geglühte Substanz

Tabelle 4

| Hersteller | | Hoesch | Huber | | PPG | | Rhone-Poulenc | Grace | |
|---|---|---|---|---|---|---|---|---|---|
| Typ | | SM 614 | Zeothix 265 | Zeothix 177 | HiSil T 600 | HiSil T 690 | Tixosil 333 | Syloid 72 | Syloid 244 |
| SiO$_2$-Gehalt 1) | (%) | 87 | -- | – | – | – | 97 | 99 | 99,5 |
| Trockenverlust 2) | (%) | 6 | 7 | – | 1-2 | 10 | – | 1 | 4 |
| Glühverlust 2) | (%) | 9 | – | – | – | – | ± 11 | 5 | 7 |
| pH-Wert 3) | | 6 | 7 | 7 | 3.5 | 7 | 6,8 | 6 | 6 |
| BET-Oberfläche | (m$^2$/g) | – | 260 | 175 | 200 | 150 | 300 | – | – |
| mittlere Teilchengröße 4) | (µm) | 8 | 1,7 | 1,5 | 0,015 | 0,021 | 2,3 | 4 | 2 |
| Öl-Absorption | (ml/100g) | – | 220 | 235 | – | – | 370 | – | .. |
| Naßsiebrückstand 5) | (%) | – | – | – | – | – | – | 0,02 | 0,02 |
| Porenvolumen | (ml/g) | – | – | – | – | – | – | 1,2 | 1,6 |
| Typ | | FK 6) | FK 6) | FK 6) | FK 6) | FK 6) | FK 6) | KG 7) | KG 7) |

1) bezogen auf bei 1000 °C geglühte Substanz
2) DIN 55 921
3) DIN 53 200
4) Coulter Counter 100 µm Kapillare
5) nach Mocker
6) Fällungskieselsäure
7) Kieselgel

EP 0 396 961 B1

Im folgenden werden Beispiele dafür gegeben, welchen Einfluß der Wassergehalt eines Wärmedämmkörpers auf die Wärmeleitfähigkeit hat. Die Messung erfolgt nach dem absoluten Einplattenverfahren mit Schutzringtechnik nach Kohlrausch bei 23 °C.

1. FK 500 LS

Einfluß des Feuchtegehaltes auf die Wärmeleitfähigkeit
Preßdichte: 200 g/l
Feuchtegehalt eingestellt mit Mikrowelle.

| Feuchtegehalt* (%) | Wärmeleitfähigkeit (mW/m/K) | Innendruck** (mbar) |
|---|---|---|
| 0,3 | 8,8 | < 4 |
| 0,5 | 8,9 | < 4 |
| 1,3 | 9,4 | < 4 |
| 2,3 | 9,1 | < 4 |
| 4,1 | 9,4 | < 4 |
| 7,0 | 11,0 | ca. 10 |
| 9,6 | 14,0 | ca. 20 |

\* Feuchtegehalt in Gew.-% bezogen auf die Trockensubstanz
\*\* Innendruck (Druck im Wärmedämmkörper) jeweils gemessen nach der Wärmeleitfähigkeitsmessung

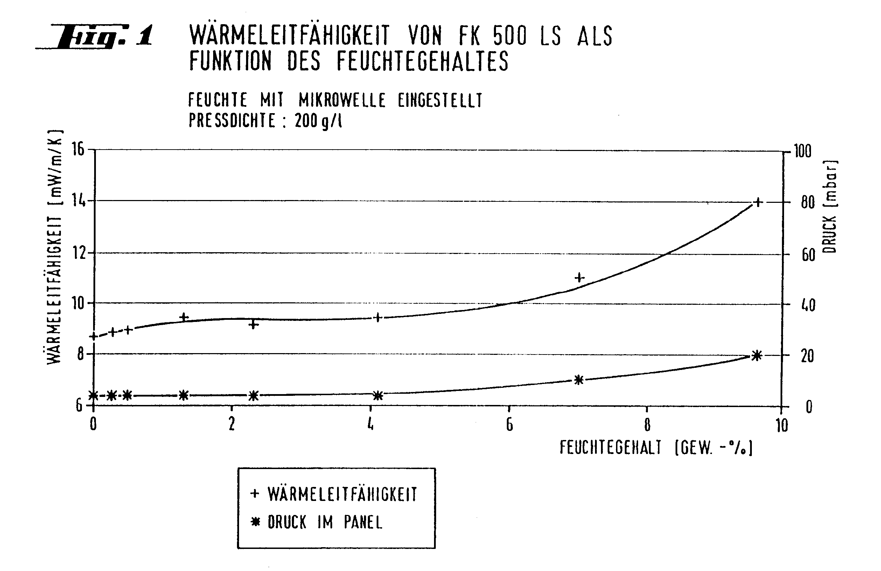

Diese Ergebnisse sind in der Figur 1 graphisch dargestellt.

2. FK 500 LS

Einfluß des Feuchtegehaltes auf die Wärmeleitfähigkeit
Preßdichte: 200 g/l
Einstellung des Feuchtegehalts durch Trocknen im Umlufttrockenschrank (105 - 110°C)

| Feuchtegehalt[*] | Wärmeleitfähigkeit | Innendruck[**] |
|:---:|:---:|:---:|
| (%) | (mW/m/K) | (mbar) |
| 0 | 9,5 | < 4 |
| 0,2 | 10,0 | < 4 |
| 0,5 | 10,5 | < 4 |
| 0,8 | 9,7 | < 4 |
| 1,0 | 10,0 | < 4 |
| 1,1 | 10,3 | < 4 |
| 2,1 | 9,7 | < 4 |
| 3,6 | 10,7 | < 4 |
| 4,0 | 9,8 | < 4 |
| 5,1 | 10,6 | < 4 |
| 7,0 | 11,0 | ca. 10 |
| 9,6 | 14,0 | ca. 20 |

[*]  Feuchtegehalt in Gew.-% bezogen auf die Trockensubstanz

[**]  Innendruck (Druck im Wärmedämmkörper) jeweils gemessen nach der Wärmeleitfähigkeitsmessung

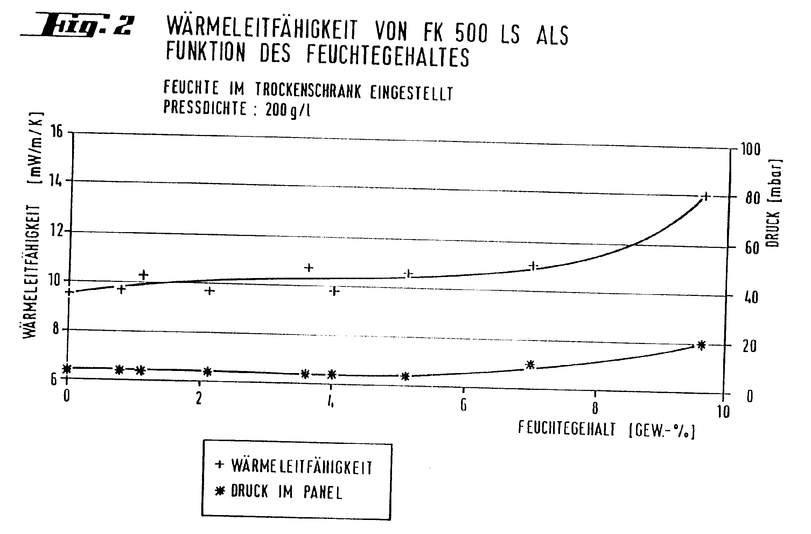

Diese Ergebnisse sind in der Figur 2 graphisch dargestellt.

3. FK 320 DS

Einfluß des Feuchtegehaltes auf die Wärmeleitfähigkeit
Preßdichte: 210 g/l
Einstellung des Feuchtegehalts durch Trocknen im Umlufttrockenschrank (105 - 110 °C)

| Feuchtegehalt[*] (%) | Wärmeleitfähigkeit (mW/m/K) | Innendruck[**] (mbar) |
|---|---|---|
| 0 | 8,6 | < 4 |
| 0,6 | 9,1 | < 4 |
| 1,5 | 9,2 | < 4 |
| 2,5 | 9,5 | < 4 |
| 3,4 | 9,3 | < 4 |
| 4,5 | 9,7 | ca. 8 |
| 5,5 | 9,7 | ca. 10 |
| 7,4 | 10,8 | ca. 15 |

[*]    Feuchtegehalt in Gew.-% bezogen auf die Trockensubstanz

[**]    Innendruck (Druck im Wärmedämmkörper) jeweils gemessen nach der Wärmeleitfähigkeitsmessung

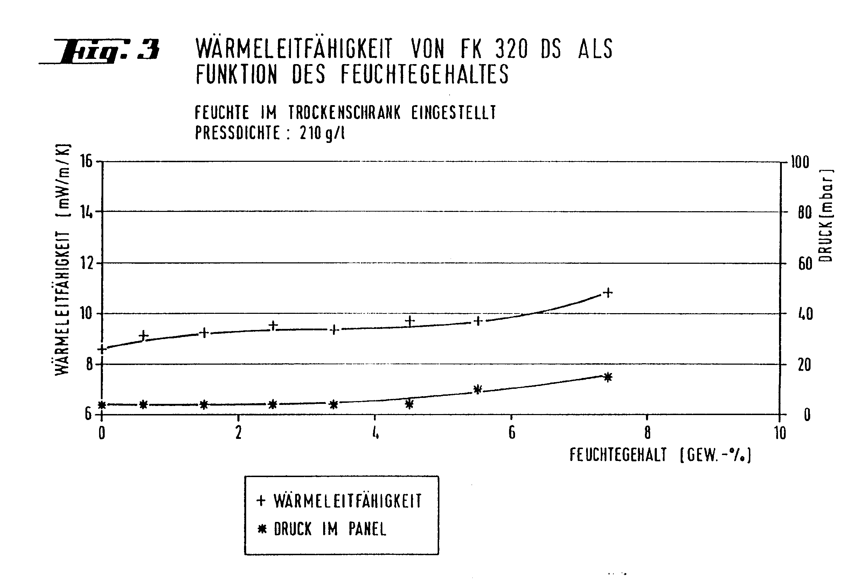

Diese Ergebnisse sind in der Figur 3 graphisch dargestellt.

Beispiele für die Berechnung der Lebensdauer von Wärmedämmkörpern

Aus der graphischen Darstellung der Abhängigkeit der Wärmeleitfähigkeit vom Feuchtegehalt des jeweiligen Füllstoffes kann der Grenzwert für die Wasseraufnahme ermittelt werden.

Wärmedämmkörper mit Kieselsäure als Füllstoff und einem Feuchtegehalt entsprechend dem Grenzwert weisen immer noch gute Dämmeigenschaften auf. Bei einem höheren Feuchtegehalt nimmt sowohl die Wärmeleitfähigkeit wie auch der Innendruck (Druck im Wärmedämmkörper) zu. Die Folge ist ein allmähliches Schlechterwerden der Isolationseigenschaften.

Aus den Figuren 1, 2 und 3 lassen sich die Feuchtegehalte für die Kieselsäuren FK 500 LS und FK 320 DS ermitteln, die zulässig sind, wenn sich mit der Wasseraufnahme die Wärmeleitfähigkeiten der Wärmedämmstoffe um maximal 25 % verschlechtern dürfen. Dabei wird von Kieselsäuren ausgegangen, die nach DIN 55 921 getrocknet wurden.

Ergebnisse:

FK 500 LS    Grenzwert: Feuchtegehalt 7 %

FK 320 DS    Grenzwert: Feuchtegehalt 6 %

Bei bekannter Kieselsäure-Einwaage und Wärmedämmkörperabmessungen berechnen sich diese Grenzwerte (maximal zulässige Wassermenge) gemäß der Gleichung: maximale Wassermenge (g) =

$$\frac{\text{Grenzwert}(\%)}{100\,(\%)} \text{ x Masse Kieselsäure}$$

1. FK 500 LS Grenzwert: Feuchtegehalt 7 %

a) Preßdichte: 180 g/l (Abmessungen 80 x 60 x 2 cm)
Volumen:                9,6 l
Masse Kieselsäure:    1728 g
Max. Wassermenge:    120,96 g

b) Preßdichte: 200 g/l (Abmessungen 80 x 60 x 2 cm)

Volumen: 9,6 l

Masse Kieselsäure: 1920 g

Max. Wassermenge: 134,4 g

2. FK 320 DS Grenzwert: Feuchtegehalt 6 %

a) Preßdichte: 200 g/l (Abmessungen 80 x 60 x 2 cm)
Volumen: 9,6 l
Masse Kieselsäure: 1920 g
Max. Wassermenge: 115,2 g
b) Preßdichte: 220 g/l (Abmessungen 80 x 60 x 2 cm)

Volumen: 9,6 l

Masse Kieselsäure: 2112 g

Max. Wassermenge: 126,72 g

Mit Hilfe der folgenden Gleichung läßt sich bei bekannter Folien-Wasserdampf-Durchlässigkeit aus dem Grenzwert die Lebensdauer von Wärmedämmkörpern abschätzen:

$$\text{Lebensdauer} \approx \frac{\text{Grenzwert(maximale Wassermenge)}}{\text{Austauschfläche} * \text{Wasserdampf–Durchlässigkeit}}$$

Dimensionen:

$$\text{Grenzwert (maximale Wassermenge): (g)}$$

$$\text{Austauschfläche:} \quad (m^2)$$

$$\text{Wasserdampf-Durchlässigkeit:} \quad \frac{g}{m^2.d}$$

$$\text{Lebensdauer:} \quad (d)$$

Mit einer Umhüllungsfolie der Wasserdampf-Durchlässigkeit von

$$0,3 \; \frac{g}{m^2.d}$$

errechnet sich beispielsweise für einen Wärmedämmkörper, der unter Verwendung von FK 500 LS hergestellt wurde, die folgende Lebensdauer:

Füllstoffe: FK 500 LS

Preßdichte: 180 g/l

Abmessungen: 100 cm x 50 cm x 2 cm Grenzwert

(Feuchtegehalt): 7 Gew.-% (= 126 g)

Maximale Wassermenge: 126 g

Austauschfläche: 1,06 m²

Wasserdampfdurchlässigkeit: 0,3 g/m²/d

$$\text{Lebensdauer} = \frac{126\,g\,.\,m^2\,.\,d}{1,06\,m^2 * 0,3\,g} = 396\ \text{tage}$$

In der folgenden Tabelle sind Beispiele dafür zusammengestellt, welche Lebensdauer mit käuflichen Folien (mit niedrigen Wasserdampf-Durchlässigkeiten) für Wärmedämmkörper mit den Fällungskieselsäuren FK 500 LS und FK 320 DS erreicht werden können.

Wärmedämmkörper-Lebensdauer in Abhängigkeit von den Wasserdampf-Durchlässigkeiten unterschiedlicher Folien

FK 500 LS: maximal zulässiger Feuchtegehalt 7 %       Abmessungen: 100 cm x 50 cm x 2 cm
FK 320 DS: maximal zulässiger Feuchtegehalt 6 %       Austauschfläche: 1,06 m$^2$

| Folien-Typen | Wasserdampf-[*] durchlässig-keit $(g/m^2/Tag)$ | Lebensdauer FK 500 LS 180 g/l | Lebensdauer FK 500 LS 200 g/l | Lebensdauer FK 320 DS 200 g/l |
|---|---|---|---|---|
| Fa. Wolff-Walsrode: Combitherm XX 8/12 K 12 50 Folie auf Vinylbasis, biaxial gereckt, beidseitig PVDC lackiert / Polyethylen | 0,4 | 297 Tage | 330 Tage | 283 Tage |
| Dow Chemical Company: Saranex-Folie Coextrudierte Barriere-Folie XZ 86 141.00 | 0,1 | 3,3 Jahre | 3,6 Jahre | 3,1 Jahre |
| 4 P Verpackungen Ronsberg: PVDC-beschichtete Kunststoffe PVC/PE/PVDC PVC/PVDE/PE PVC/PVDC | 0,15 | 2,2 Jahre | 2,4 Jahre | 2,1 Jahre |

[*] gemessen bei 23 °C und 85 % relativer Luftfeuchte                                   . . .

EP 0 396 961 B1

**Patentansprüche**

1. Formkörper, vorzugsweise plattenförmig, für die Verwendung als Wärmedämmung, hergestellt aus
a) einem feinverteilten, pulverförmigen bzw. faserförmigen Stoff, der eine Wasseraufnahmekapazität von 4 bis 50 Gew.-% bei 23 °C und 85 % relativer Feuchte hat,

b) einer metallfreien Umhüllung, die diesen feinverteilten, pulverförmigen bzw. faserförmigen Stoff umhüllt und dabei eine Wasserdampfdurchlässigkeit von 0,1 bis 0,5 g/(m².d) bei 23 °C und 85 % relativer Feuchte und Gas-Durchlässigkeiten von 0,1 bis 0,5 cm³/(m².d.bar) bei 23 °C aufweist,
mit der Eigenschaft, Wasser bis zu einer Menge von 2 bis 15 Gew.-% aufzunehmen, ohne daß dabei seine Wärmeleitfähigkeit um mehr als 25 % verschlechtert wird.

2. Formkörper gemäß Anspruch 1, dadurch gekennzeichnet, daß der pulverförmige bzw. faserförmige Stoff in einer mikroporösen Umhüllung getrocknet wurde.

3. Formkörper nach Anspruch 2, dadurch gekennzeichnet, daß die mikroporöse Umhüllung in die metallfreie Umhüllung eingebracht wurde.

4. Verfahren zur Herstellung eines Formkörpers zur Wärmedämmung nach Anspruch 1, dadurch gekennzeichnet, daß man
a) einen feinverteilten, pulverförmigen bzw. faserförmigen Stoff, der eine Wasseraufnahmekapazität von 4 bis 50 Gew.-% bei 23 °C und 85 % relativer Feuchte hat, bereitstellt und gegebenenfalls unter Bedingungen trocknet, die für das Austreiben des Oberflächenwassers ausreichen,
b) den pulverförmigen bzw. faserförmigen Stoff gegebenenfalls in eine Form verpreßt,
c) den gegebenenfalls getrockneten und gegebenenfalls verpreßten pulverförmigen bzw. faserförmigen Stoff in eine metallfreie Umhüllung, die eine Öffnung zum Evakuieren und eine Wasserdampfdurchlässigkeit von 0,1 bis 0,5 g/(m².d) bei 23 °C und 85 % relativer Feuchte und Gasdurchlässigkeiten von 0,1 bis 0,5 cm³/(m².d.bar) bei 23 °C aufweist, einbringt,
d) die metallfreie Umhüllung evakuiert und
e) die Evakuierungsöffnung der metallfreien Umhüllung unter Erhalt des Vakuums im Innern der Umhüllung verschließt.

5. Verfahren nach Anspruch 4, dadurch gekennzeichnet, daß man den pulverförmigen bzw. faserförmigen Stoff in einer mikroporösen Umhüllung trocknet.

6. Verfahren nach Anspruch 4, dadurch gekennzeichnet, daß man den pulverförmigen bzw. faserförmigen Stoff in einer mikroporösen Umhüllung verpreßt und gegebenenfalls danach trocknet.

7. Verwendung eines Formkörpers gemäß Anspruch 1 als Lager-, Verpackungs- und/oder Transportbehälter für temperaturempfindliche Güter.


**Claims**

1. Moulding, preferably in the form of a plate, for use as thermal insulation, produced from
a) a finely divided, pulverulent or fibrous material having a water absorption capacity of from 4 to 50% by weight at 23°C and 85% relative humidity,
b) a metal-free covering which envelops this finely divided, pulverulent or fibrous material and has a water vapour permeability of from 0.1 to 0.5 g/(m².d) at 23°C and 85% relative humidity and gas permeabilities of from 0.1 to 0.5 cm³/(m².d.bar) at 23°C,
with the property of absorbing water up to a quantity of from 2 to 15% by weight without its thermal conductivity being reduced by more than 25%.

2. Moulding according to Claim 1, characterised in that the pulverulent or fibrous material was dried inside a microporous covering.

3. Moulding according to Claim 2, characterised in that the microporous covering was introduced into the metal-free covering.

4. A process for the production of a moulding for thermal insulation according to Claim 1, characterised in that
a) a finely divided, pulverulent or fibrous material having a water absorption capacity of from 4 to 50% by weight at 23°C and 85% relative humidity is provided and optionally dried under conditions sufficient to drive out the surface water,
b) the pulverulent or fibrous material is optionally pressed into a shape,

c) the optionally dried and optionally compressed pulverulent or fibrous material is introduced into a metal-free covering which has an opening for evacuation and a permeability to water vapour of from 0.1 to 0.5 g/(m².d) at 23°C and 85% relative humidity and gas permeabilities of from 0.1 to 0.5 cm³/(m².d.bar) at 23°C,

d) the metal-free covering is evacuated and

e) the evacuation opening of the metal free covering is sealed so that the vacuum inside the covering is preserved.

5. A process according to Claim 4, characterised in that the pulverulent or fibrous material is dried inside a microporous covering.

6. A process according to Claim 4, characterised in that the pulverulent or fibrous material is compressed inside a microporous covering and optionally thereafter dried.

7. Use of a moulding according to Claim 1 as storage, packaging and/or transport container for temperature sensitive goods.


## Revendications

1. Corps moulé, de préférence sous forme de plaque, pour utilisation en tant qu'isolant thermique, fabriqué à partir de :

a) une substance finement divisée, pulvérulente ou fibreuse, qui a une capacité d'absorption d'eau allant de 4 à 50 % en poids, à 23°C et 85 % d'humidité relative,

b) une enveloppe exempte de métal, qui entoure cette substance finement divisée, pulvérulente ou fibreuse, et présente une perméabilité à la vapeur d'eau allant de 0,1 à 0,5 g/(m².j) à 23°C et 85 % d'humidité relative et des perméabilités aux gaz allant de 0,1 à 0,5 cm³/(m².j.bar) à 23°C,

ayant la propriété d'absorber l'eau jusqu'à une quantité de 2 à 15 % en poids, sans que sa conductivité thermique soit en même temps dégradée de plus de 25 %.

2. Corps moulé selon la revendication 1, caractérisé en ce que la substance pulvérulente ou fibreuse est séchée dans une enveloppe microporeuse.

3. Corps moulé selon la revendication 2, caractérisé en ce que l'enveloppe microporeuse a été introduite dans l'enveloppe exempte de métal.

4. Procédé pour la fabrication d'un corps moulé pour isolation thermique selon la revendication 1, caractérisé en ce que :

a) on prépare une substance finement divisée, pulvérulente ou fibreuse qui présente un pouvoir d'absorption d'eau allant de 4 à 50 % en poids à 23°C et 85 % d'humidité relative, et éventuellement on la sèche dans des conditions suffisantes pour l'expulsion de l'eau superficielle,

b) éventuellement on comprimee dans un moule la substance pulvérulente ou fibreuse,

c) on introduit la substance pulvérulente ou fibreuse, éventuellement séchée et éventuellement comprimée, dans une enveloppe exempte de métal, qui comporte un orifice pour la mise sous vide et présente une perméabilité à la vapeur d'eau allant de 0,1 à 0,5 cm³/(m².j) à 23°C et 85 % d'humidité relative et des perméabilités aux gaz allant de 0,1 à 0,5 cm³(m².j.bar) à 23°C,

d) on met sous vide l'enveloppe exempte de métal et

e) on scelle l'orifice de mise sous vide de l'enveloppe exempte de métal, avec obtention du vide à l'intérieur de l'enveloppe.

5. Procédé selon la revendication 4, caractérisé en ce que l'on sèche la substance pulvérulente ou fibreuse dans une enveloppe microporeuse.

6. Procédé selon la revendication 4, caractérisé en ce que la substance pulvérulente ou fibreuse est comprimée dans une enveloppe microporeuse et éventuellement ensuite séchée.

7. Utilisation d'un corps moulé selon la revendication 1, en tant que contenant de stockage, emballage et/ou transport pour produits sensibles à la température.

## Fig. 1 WÄRMELEITFÄHIGKEIT VON FK 500 LS ALS FUNKTION DES FEUCHTEGEHALTES

FEUCHTE MIT MIKROWELLE EINGESTELLT
PRESSDICHTE : 200 g/l

DRUCK [mbar]

FEUCHTEGEHALT [GEW. -°/o]

WÄRMELEITFÄHIGKEIT [mW/m/K]

+ WÄRMELEITFÄHIGKEIT
* DRUCK IM PANEL

EP 0 396 961 B1

*Fig. 2*  WÄRMELEITFÄHIGKEIT VON FK 500 LS ALS
FUNKTION DES FEUCHTEGEHALTES

FEUCHTE IM TROCKENSCHRANK EINGESTELLT
PRESSDICHTE : 200 g/l

+ WÄRMELEITFÄHIGKEIT
* DRUCK IM PANEL

**Fig. 3** WÄRMELEITFÄHIGKEIT VON FK 320 DS ALS FUNKTION DES FEUCHTEGEHALTES

FEUCHTE IM TROCKENSCHRANK EINGESTELLT
PRESSDICHTE : 210 g/l

Legend:
+ WÄRMELEITFÄHIGKEIT
* DRUCK IM PANEL

EP 0 396 961 B1